# EUROPEAN PATENT SPECIFICATION

(11) **EP 3 636 960 B1**
(45) Date of publication and mention of the grant of the patent: **24.11.2021**
(21) Application number: 19200718.5
(22) Date of filing: 01.10.2019
(51) Int. Cl.: F16H 3/089

(54) **VEHICLE TRANSMISSION, POWERTRAIN AND VEHICLE**
FAHRZEUGGETRIEBE, ANTRIEBSSTRANG UND FAHRZEUG
TRANSMISSION DE VÉHICULE, GROUPE MOTOPROPULSEUR ET VÉHICULE

(30) Priority: 09.10.2018 JP 2018190671
(43) Date of publication of application: 15.04.2020
(73) Proprietor: Mazda Motor Corporation, Aki-gun, Hiroshima 730-8670 (JP)
(72) Inventor: ISHII, Mamoru, Fuchu-cho, Aki-gun, Hiroshima 730-8670 (JP)
(74) Representative: Müller-Boré & Partner Patentanwälte PartG mbB

(56) References cited:
- WO-A1-2013/007972
- DE-A1- 3 033 625
- US-A1- 2010 186 549

## Description

### [Technical Field]

The present invention relates to a vehicle transmission for an automobile and the like, a powertrain including the transmission, and a vehicle including the powertrain.

### Description of the Prior art

### [Background Art]

In general, a manual transmission used in a vehicle such as an automobile includes an input shaft coupled to a driving source such as an engine via a clutch, an output shaft disposed in parallel with the input shaft and coupled to driving wheels via a differential gear, and a plurality of gear trains for forward gears provided between those two shafts. In a so-called transversely mounted type manual transmission, a final drive gear that is fixedly provided on the output shaft and transmits power to the differential gear is usually provided.

As a gear train for a forward gear in this type of transmission, a constant-mesh-type gear train is normally employed. The constant-mesh-type gear train is formed by an input gear provided on the input shaft, and an output gear that is provided on the output shaft and constantly meshes with the input gear. One of the input gear and the output gear is a fixed gear that is fixed to the shaft, and the other gear is a loosely fitted gear that is loosely fitted on the shaft. When it is shifted to a certain gear while the vehicle is traveling, the rotation of the loosely fitted gear in the gear train of the gear is fixed to the shaft via a synchronizer, thereby smoothly realizing a power transmission state in the gear train.

In the manual transmission, a gear train for reverse gear is also provided. As a gear train for reverse gear, a selective-slide-type gear train is sometimes employed. The selective-slide-type gear train for reverse gear is formed by a reverse input gear fixedly provided on an input shaft, a reverse output gear fixedly provided on an output shaft, and reverse idle gears loosely fitted on a reverse idle shaft parallel to the input shaft and the output shaft. When shift operation to the reverse gear is performed, the reverse idle gears slide and mesh with the reverse input gear and the reverse output gear, and the gear train for reverse gear is placed in a power transmission state.

Meanwhile, also in the gear train for reverse gear, in order to realize smoother power transmission state, the gear train for reverse gear may be a constant-mesh-type gear train and a synchronizer for reverse gear may be disposed as with the gear train for forward gears. For example, there may be a configuration in which one of the reverse input gear provided on the input shaft and the reverse output gear provided on the output shaft is a fixed gear that is fixedly provided on the shaft, the other is a loosely fitted gear that is loosely fitted on the shaft, and the synchronizer for reverse gear stage is provided on the shaft on which the loosely fitted gear is provided.

However, when the constant-mesh-type gear train for reverse gear is employed, in order to dispose the synchronizer for reverse gear on the input shaft or the output shaft, the length of the shaft on which the synchronizer for reverse gear is disposed needs to be extended. As a result, the manual transmission is upsized in the axial direction.

Meanwhile, in manual transmissions disclosed in Patent Document 1 and Patent Document 2, a constant-mesh-type gear train for reverse gear is employed, and a synchronizer for reverse gear is disposed on a reverse idle shaft which is provided besides an input shaft and an output shaft, and hence the extension of the shaft lengths of the input shaft and the output shaft is suppressed.

Now, the configuration of Patent Document 1 is specifically described with reference to FIG. 4.

A plurality of gear trains G501 through G506 for forward gears of a transmission 500 in Patent Document 1 are disposed in the order of gear stages from the first to the sixth starting from the side of a driving source 502, and a final drive gear 528 is fixedly provided on the side further closer to the driving source 502 than the gear train G501 for first gear stages on an output shaft 520. Input gears 511 and 512 for the first gear and the second gear are fixedly provided on an input shaft 510, output gears 523 to 526 for the third gear to the sixth gear are fixedly provided on the output shaft 520, output gears 521 and 522 for the first gear and the second gear are loosely fitted on the output shaft 520, input gears 513 to 516 for the third gear to the sixth gear are loosely fitted on the input shaft 510, a synchronizer 540 for first gear and second gear is provided on the output shaft 520, and synchronizers 550 and 560 for third gear and fourth gear and fifth gear and sixth gear are provided on the input shaft 510.

Meanwhile, in a gear train GR500 for reverse gear, a reverse input gear 517 integrally provided with the input gear 511 for first gear on the input shaft 510, a first reverse idle gear 531 that is loosely fitted on a reverse idle shaft 530 and constantly meshes with the reverse input gear 517, a second reverse idle gear 532 loosely fitted on the reverse idle shaft 530 in the same manner, and a reverse output gear 527 that is formed on a synchro sleeve 541 of the synchronizer 540 for first gear and second gear on the output shaft 520 and constantly meshes with the second reverse idle gear 532 are provided.

On the reverse idle shaft 530, a synchronizer 570 for reverse gear stage for synchronizing the first reverse idle gear 531 and the second reverse idle gear 532 is disposed. As a result, the extension of the input shaft 510 or the output shaft 520 becomes unnecessary while including the synchronizer 570 for reverse gear, and hence the extension of the shaft length of the transmission is suppressed.

In the transmission described in Patent Document 2, as with the transmission described in Patent Document 1, a plurality of gear trains for forward gears are disposed between an input shaft and an output shaft, and a first final drive gear is provided on the output shaft. In the transmission, a reverse idle shaft (the second output shaft in Patent Document 2) provided in parallel with the input shaft and the output shaft is provided, and a gear train for reverse gear is disposed between the output shaft and the reverse idle shaft. On the reverse idle shaft, a synchronizer for reverse gear is disposed, and a second final drive gear is provided. As a result, as with the configuration of Patent Document 1, the extension of the input shaft or the output shaft becomes unnecessary while including the synchronizer for reverse gear, and hence the shaft length of the transmission is suppressed.

### [Prior Art Document]

### [Patent Document]

[Patent Document 1] JP 2005 0003078 A
[Patent Document 2] JP 2015 175448 A
Each of DE 30 33 625 A1, US 2010/186549 A1 and WO 2013/007972 A1 discloses, in the opinion of the examining division of the European Patent Office, a vehicle transmission falling within the wording of the precharacterizing portion of claim 1.

### [Summary of Invention]

### [Problem to be Solved by the Invention]

Meanwhile, the number of gear stages are increasing in the manual transmission in the recent years in order to improve the drive feeling and the like. As a result, the number of gears and synchronizers disposed on the input shaft and the output shaft increases, and hence the size of the transmission in the axial direction tends to increase.

In a so-called hybrid vehicle that is a type in which a motor is disposed between an input shaft of a transmission and an output shaft of a driving source, for example, the full length of a powertrain in the axial direction tends to be long. The tendency becomes disadvantageous when the powertrain is disposed in a limited space in the vehicle width direction in a case where the engine and the transmission are transversely placed as can often be seen in so-called FF (front-engine front-drive) vehicles.

Under the influence of the technical trend in recent years, there has been an increasingly strong demand in terms of the subject of the shortening the axial size of manual transmission, and further improvement is requested for the measures in Patent Document 1 and Patent Document 2 described above.

In particular, in the transmission in Patent Document 2, the first final drive gear on the output shaft that outputs the driving force in the state in which the forward gear is selected, and the second final drive gear on the reverse idle shaft that outputs the driving force in the state in which the reverse gear is selected need to mesh with the final driven gear of the differential gear without interfering with each other, and hence there is also a problem in that the structure becomes complicated and is easily upsized in the radial direction as a whole.

Therefore, a subject of the present invention is to further downsize a manual transmission while maintaining simplification of the structure in the manual transmission.

### [Means to Solve the Problem]

This object is achieved by a vehicle transmission according to claim 1. The dependent claims concern particular embodiments of the invention as defined in claim 1.

Particularly, the predetermined synchronizer is used for both of two predetermined gear trains among the plurality of gear trains for forward gears, and the final drive gear and the predetermined synchronizer are disposed between the two predetermined gear trains in the axial direction.

Further particularly, the predetermined synchronizer is a synchronizer that corresponds to a gear train for maximum speed gear among the plurality of gear trains.

Further particularly, the input shaft and the output shaft extend in a vehicle body width direction, and the final drive gear is configured to transmit power to a differential gear connected to a driving wheel.

Further particularly, the vehicle transmission further includes: a reverse idle shaft disposed in parallel with the input shaft and the output shaft; and a gear train for reverse gear provided so as to span across the input shaft, the output shaft, and the reverse idle shaft. In the vehicle transmission, the plurality of gear trains for forward gears includes a gear train for first gear and a gear train for second gear, the gear train for first gear includes an input gear for first gear fixed to the input shaft, and an output gear for first gear that is loosely fitted on the output shaft so as to mesh with the input gear for first gear, the gear train for second gear includes an input gear for second gear fixed to the input shaft, and an output gear for second gear that is loosely fitted on the output shaft so as to mesh with the input gear for second gear, a synchronizer for first gear and second gear that selectively fixes either one of the output gear for first gear and the output gear for second gear to the output shaft is provided between the output gear for first gear and the output gear for second gear on the output shaft, the gear train for reverse gear includes: a reverse input gear provided on the input shaft; a first reverse idle gear that is loosely fitted on the reverse idle shaft and meshes with the reverse input gear; a second reverse idle gear loosely fitted on the reverse idle shaft and disposed so as to be separated from the first reverse idle gear with a predetermined gap in the axial direction; and a reverse output gear that is provided on the output shaft and meshes with the second reverse idle gear, a connection/disconnection mechanism that forms and releases connection between the first reverse idle gear and the second reverse idle gear is provided in the predetermined gap on the reverse idle shaft, the reverse input gear is disposed so as to be adjacent to a side, which is opposite to the driving source, of a driving-source-side input gear positioned on a driving source side among the input gear for first gear and the input gear for second gear on the input shaft, and the reverse output gear is disposed to be adjacent to a side, which is opposite to the driving source, of a non-driving-source-side output gear positioned on the side opposite to the driving source among the output gear for first gear and the output gear for second gear on the output shaft.

Further particularly, the driving source includes an engine and a motor disposed on a same axis line as the input shaft.

### [Effect of the Invention]

According to the present invention, the final drive gear is disposed by effectively using the dead space formed on the output shaft, and hence the size of the output shaft in the axial direction can be shortened as compared to a case where the final drive gear is disposed in a position shifted from the gear train and the synchronizer in the axial direction as in the prior art. As a result, the axial length of the transmission can be shortened without causing the structure of the transmission to become more complicated, and hence the layout efficiency of the transmission can be improved.

Further particularly, the final drive gear is disposed on the output shaft by using the space formed between the two predetermined gear trains, and hence the size of the output shaft in the axial direction can be effectively shortened.

In general, among plurality of gear trains, a difference between gear ratios of one pair of gear trains for high-speed gears tends to be smaller than a difference between gear ratios of one pair of gear trains for low-speed gears, and the torque necessary for synchronization tends to be smaller for the high-speed gears. Therefore, the friction surface of the synchronizer between gear trains for high-speed gears can be smaller than the friction surface of the synchronizer between gear trains for low-speed gears, and hence the outer diameter of the synchronizer for high-speed gears can be smaller than that of the synchronizer for low-speed stage.

Further particularly, a synchronizer with a relatively small diameter that corresponds to the gear train for maximum speed gear is disposed in a place on the input shaft that corresponds to the final drive gear on the output shaft, and hence the interference between the synchronizer and the final drive gear in the radial direction is likely to be avoided in an easier manner than a case where any other synchronizer having a relatively large diameter is disposed.

Further particularly, in a so-called transversely mounted type of transmission in which the input shaft and the output shaft are disposed so as to extend in the vehicle body width direction, the size in the axial direction is devised to be shorter as described above. Therefore, the ease of mounting the vehicle transmission in the space in the engine compartment, that is limited in the vehicle body width direction, can be devised to be improved.

Further particularly, the reverse input gear is disposed so as to be adjacent to the side, which is opposite to the driving source, of the driving-source-side input gear positioned on the driving source side among the input gear for first gear and the input gear for second gear. Therefore, unlike the prior art of Patent Document 1 described above, there is no need to secure a space on the input shaft for disposing the reverse input gear at the driving source side with respect to the driving-source-side input gear. Therefore, as compared to the prior art of Patent Document 1, the part of the input shaft on the driving source side can be devised to be shorter so as to reduce the interval between the driving-source-side input gear and the driving source in the axial direction.

Further, as illustrated in FIG. 4, in the prior-art structure of Patent Document 1, a synchro sleeve 541 of a synchronizer 540 for first gear and second gear and a reverse output gear 527 are integrated, and hence the synchronizer 540 is upsized in the axial direction. Meanwhile, the reverse output gear in the present invention is provided so as to be independent of the synchronizer for first gear and second gear and on the side opposite to the driving source than the non-driving-source-side output gear on the output shaft, and hence the synchronizer can be formed in a compact manner in the axial direction. Therefore, the non-driving-source-side output gear and the input gear that meshes therewith can be disposed closer to the driving-source-side input gear in the axial direction. Therefore, on the input shaft, the interval between the input gear for first gear and the input gear for second gear in the axial direction can be shortened.

Additionally, in the prior art structure of Patent Document 1, the synchro sleeve 541 and the reverse output gear 527 are integrated, and hence a wide dead space S2 in which a gear, a synchronizer, or the like is not disposed is formed in a range in which the reverse output gear 527 slides in the axial direction between the input gear 511 for first gear and the input gear 512 for second gear on the input shaft 510.

Meanwhile, the reverse output gear in the present invention is provided independently from the synchronizer for first gear and second gear, and does not move in the axial direction. Therefore, as described above, the reverse input gear can be disposed in a region on the input shaft in the axial direction that overlaps with the synchronizer for first gear and second gear on the output shaft without interfering with the reverse output gear. As described above, the reverse input gear is disposed with use of the dead space on the input shaft. Therefore, the extension of the input shaft to the side opposite to the driving source is suppressed although the reverse input gear is disposed closer to the side opposite to the driving source as compared to the prior art of Patent Document 1. Therefore, shortening of the entire input shaft can be effectively made.

As described above, the input shaft can be effectively shortened, and the components of the gear train for first gear, the gear train for second gear, and the gear train for reverse gear can be disposed in a compact manner in the axial direction as a whole without interfering with each other.

Therefore, in addition to the shortening of the length of the output shaft in the axial direction, the length of the input shaft in the axial direction can be shortened, and hence the size of the transmission in the axial direction can be shortened in a more effective manner. Thus, the vehicle transmission can be constructed in a compact manner in the axial direction as a whole. As a result, the ease of mounting the transmission onto the vehicle can be effectively increased.

Further particularly, in the powertrain of a so-called hybrid vehicle comprising as the driving source the motor and the engine disposed on the same straight line as the input shaft of the vehicle transmission, the transmission is downsized in the axial direction as described above. Therefore, the ease of mounting the engine, the motor, and the transmission can be devised to be improved under a stricter condition regarding the layout property in the axial direction.

### [Brief Description of Drawings]

[FIG. 1] Skeleton diagram of a vehicle transmission according to Embodiment 1 of the present invention;
[FIG. 2] Schematic view of the positional relationship between shafts of the transmission in an in-vehicle state seen from the axial direction;
[FIG. 3] Skeleton diagram of a vehicle transmission according to Embodiment 2 of the present invention; and
[FIG. 4] Skeleton diagram of a manual transmission according to an example of the prior art.

### [Embodiments of the Invention]

The configuration of a vehicle transmission according to the present invention is described below for each embodiment.

### [Embodiment 1]

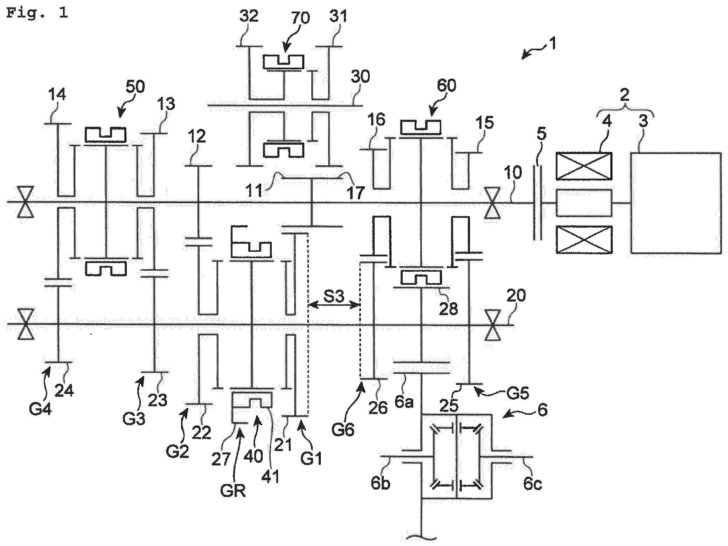

FIG. 1 is a skeleton diagram of the vehicle transmission according to Embodiment 1 of the present invention. A transmission 1 according to Embodiment 1 is particularly a so-called transversely mounted type of manual transmission, and is configured to achieve a plurality of, particularly six forward speeds and one reverse speed. The vehicle transmission may be modified to be capable of automatically performing gear change by an actuator.

The transmission 1 forms a powertrain together with a driving source 2. In this embodiment, the driving source 2 is formed by an engine 3 and a motor 4 such as an electric motor. As a result, a powertrain of a so-called hybrid vehicle is formed. An output shaft of the engine 3 and an output shaft of the motor 4 are particularly disposed on the same axis line extending in the vehicle body width direction, and are directly coupled to each other. The output shaft of the engine 3 and the output shaft of the motor 4 may be in parallel with each other.

The transmission 1 particularly includes one or more, particularly a single input shaft 10 into which the rotation driving force or the torque from the driving source 2 is input via one or more, particularly a single clutch apparatus 5, and a single output shaft 20 and a reverse idle shaft 30 disposed in parallel with the input shaft 10. The input shaft 10 is particularly disposed on the same axis line as the output shaft of the engine 3 and the output shaft of the motor 4, and is coupled to the output shaft of the motor 4 via the clutch apparatus 5 in a dis-connectable manner. The input shaft 10 and the output shaft 20 are rotatably supported by a transmission case (not shown) via a bearing member. The reverse idle shaft 30 is fixed to the transmission case.

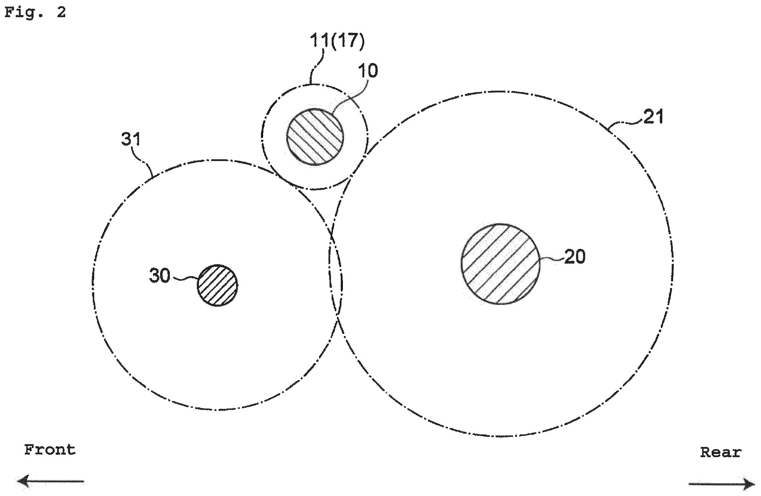

As illustrated in FIG. 2, the output shaft 20 is particularly disposed behind and below the input shaft 10, and the reverse idle shaft 30 is particularly disposed ahead and below the input shaft 10. The output shaft 20 is disposed in basically the same height as or above the reverse idle shaft 30 in vehicle up-down direction.

As illustrated in FIG. 1, the output shaft 20 is particularly coupled to driving wheels (not shown) via a differential gear 6. Specifically, a final drive gear 28 is provided on the output shaft 20, and the final drive gear 28 meshes with a final driven gear 6a of the differential gear 6. As a result, the rotation of the output shaft 20 is transmitted to left and right axles 6b and 6c via the differential gear 6, and is further transmitted to the driving wheels coupled to the axles 6b and 6c.

A gear train G5 for fifth gear, a gear train G6 for sixth gear, a gear train G1 for first gear, a gear train GR for reverse gear, a gear train G2 for second gear, a gear train G3 for third gear, and a gear train G4 for fourth gear are particularly disposed between the input shaft 10 and the output shaft 20 in the transmission 1 in the order from the driving source 2 side. The gear train G6 has the lowest gear ratio among the plurality of gear trains G1 to G6. Particularly, the gear ratio of the gear train G6 is lower than 1.

The gear train G1 for first gear and the gear train G2 for second gear are particularly formed by driving-side input gears (fixed gears) 11 and 12 fixedly or unrotatably provided on the input shaft 10, and driven-side output gears (loosely fitted gears) 21 and 22 loosely or rotatably fitted on the output shaft 20. In other words, the driving-side input gears (fixed gears) 11 and 12 are not rotatable with respect to the input shaft 10, and the driven-side output gears (loosely fitted gears) 21 and 22 are rotatable with respect to the output shaft 20. The gear trains G3 to G6 for the third gear to the sixth gear are formed by driving-side input gears (loosely fitted gears) 13, 14, 15, and 16 loosely or rotatably fitted on the input shaft 10 and driven-side output gears (fixed gears) 23, 24, 25, and 26 fixedly provided on the output shaft 20. In other words, the driving-side input gears (loosely fitted gears) 13, 14, 15, and 16 are rotatable with respect to the input shaft 10, and the driven-side output gears (fixed gears) 23, 24, 25, and 26 are not rotatable with respect to the output shaft 20. The configuration of the gear train GR for reverse gear is described below.

A synchronizer 40 for first gear and second gear that selectively fixes either one of the output gear (loosely fitted gear) 21 for first gear and the output gear (loosely fitted gear) 22 for second gear to the output shaft 20 is disposed between the output gear (loosely fitted gear) 21 for first gear and the output gear (the loosely fitted gear) 22 for second gear on the output shaft 20. A synchronizer 50 for third gear and fourth gear that selectively fixes either one of the input gear (loosely fitted gear) 13 for third gear and the input gear (loosely fitted gear) 14 for fourth gear to the input shaft 10 is disposed between the input gear (loosely fitted gear) 13 for third gear and the input gear (loosely fitted gear) 14 for fourth gear on the input shaft 10. A synchronizer 60 for fifth gear and sixth gear that selectively fixes either one of the input gear (loosely fitted gear) 15 for fifth gear and the input gear (loosely fitted gear) 16 for sixth gear to the input shaft 10 is disposed between the input gear (loosely fitted gear) 15 for fifth gear and the input gear (loosely fitted gear) 16 for sixth gear on the input shaft 10 as well.

The gear train GR for reverse gear is formed by a reverse input gear 17 fixedly provided on the input shaft 10, a first reverse idle gear 31 that is loosely or rotatably fitted on the reverse idle shaft 30 and constantly meshes with the reverse input gear 17, a second reverse idle gear 32 loosely or rotatably fitted on the reverse idle shaft 30, and a reverse output gear 27 that is formed on a synchro sleeve 41 of the synchronizer 40 for first gear and second gear on the output shaft 20 and constantly meshes with the second reverse idle gear 32.

The reverse input gear 17 is particularly provided integrally with the input gear 11 for first gear, and is used both for the gear train G1 for first gear and the gear train GR for reverse gear. The input gear 11 for first gear and the reverse input gear 17 are particularly disposed in positions offset from each other in the axial direction. Specifically, the reverse input gear 17 is disposed so as to be adjacent to the input gear 11 for first gear on the driving source 2 side of the input gear 11 for first gear. The input gear 11 for first gear and the reverse input gear 17 have substantially the same diameter.

Now, the reason of offsetting the input gear 11 for first gear and the reverse input gear 17 from each other in the axial direction will be explained.

The first reverse idle gear 31 and the output gear 21 for first gear having a larger diameter than the input gear 11 for first gear (reverse input gear 17) mesh with the input gear 11 for first gear (reverse input gear 17). As illustrated in FIG. 2, the first reverse idle gear 31 and the output gear 21 for first gear are disposed so as to overlap with each other when seen from the axial direction. Therefore, if the first reverse idle gear 31 and the output gear 21 for first gear are disposed in the same position in the axial direction, both of the gears 21 and 31 interfere with each other. Thus, in this embodiment, the first reverse idle gear 31 is disposed so as to be offset from the output gear 21 for first gear to the driving source 2 side in the axial direction (see FIG. 1). As a result, the interference between both of the gears 21 and 31 is avoided. Accordingly, the reverse input gear 17 is disposed so as to be offset to the driving source 2 side in the axial direction with respect to the input gear 11 for first gear.

As illustrated in FIG. 1, on the reverse idle shaft 30, a predetermined gap is provided in the axial direction between the first reverse idle gear 31 and the second reverse idle gear 32, and a synchronizer 70 for reverse gear is disposed in the predetermined gap as a connection/disconnection mechanism that couples the first reverse idle gear 31 and the second reverse idle gear 32 to each other.

The second reverse idle gear 32 meshes with the reverse output gear 27 on the output shaft 20. In this embodiment, the reverse output gear 27 is provided on the outer periphery of the synchro sleeve 41 of the synchronizer 40 for first gear and second gear, and hence slides in the axial direction together with the synchro sleeve 41 when gear is changed to the first gear or the second gear. At this time, the meshing state between the reverse output gear 27 and the second reverse idle gear 32 is maintained.

As described above, the reverse output gear 27 is provided so as to be movable in the axial direction between the gear train G1 for first gear and the gear train G2 for second gear. Meanwhile, the reverse input gear 17 and the first reverse idle gear 31 are disposed so as to be offset from the gear train G1 for first gear to the side opposite to the reverse output gear 27 (the driving source 2 side) in the axial direction as described above.

As a result, the interference between the reverse output gear 27 that slides in the axial direction between the gear train G1 for first gear and the gear train G2 for second gear, and the reverse input gear 17 and the first reverse idle gear 31 is avoided.

The final drive gear 28 on the output shaft 20 is disposed in a position in the axial direction that overlaps with the synchronizer 60 for fifth gear and sixth gear on the input shaft 10. In other words, the final drive gear 28 is disposed between the gear train G5 for fifth gear and the gear train G6 for sixth gear together with the synchronizer 60 for fifth gear and sixth gear. More specifically, the final drive gear 28 is disposed so as to be adjacent to the output gear 25 for fifth gear and the output gear 26 for sixth gear between those gears 25 and 26 on the output shaft 20.

Next, the operation of the transmission 1 formed as above is described.

When a shifting operation to a forward gears is performed by a gear stick or a shift lever (not shown), only one synchronizer that corresponds to the shift stage of the gear to which the shifting operation has been performed is operated among the abovementioned synchronizers 40, 50, and 60. As a result, among the abovementioned gear trains G1 to G6 for forward gears, only the gear train of the shift stage to which the shifting operation has been performed is selectively placed in a power transmission state between the input shaft 10 and the output shaft 20.

For example, when the shifting operation to the first gear or the second gear is performed by the gear stick, the synchro sleeve 41 of the synchronizer 40 for first gear and second gear slides to the side of the gear train G1 for first gear or the side of the gear train G2 for second gear on the output shaft 20 in conjunction with the operation. Then, the loosely fitted gear 21 or 22 on the side to which sliding has been performed is fixed to the output shaft 20, and the gear train of the shift stage to which the shifting operation has been performed is placed in a power transmission state. Similarly, when the shifting operation is performed to any of the third gear to the sixth gear by the gear stick, a synchro sleeve 51 of the synchronizer 50 for third gear and fourth gear or a synchro sleeve 61 of the synchronizer 60 for fifth gear and sixth gear slides on the input shaft 10 in conjunction with the operation. Then, the loosely fitted gear 13, 14, 15, or 16 on the side to which the sliding has been performed is fixed to the input shaft 10, and the gear train of the shift stage to which the shifting operation has been performed is placed in a power transmission state.

Meanwhile, when the shifting operation of the gear stick to the reverse position is performed, in conjunction with the operation, a synchro sleeve 71 of the synchronizer 70 for reverse gear slides to the driving source 2 side in the axial direction, and the first reverse idle gear 31 and the second reverse idle gear 32 are coupled so as to integrally rotate. As a result, when the gear train GR for reverse gear is placed in a power transmission state, the rotation of the input shaft 10 is transmitted to the first reverse idle gear 31 via the reverse input gear 17, and the rotation of the first reverse idle gear 31 is transmitted to the second reverse idle gear 32 via the synchronizer 70 for reverse gear. The rotation transmitted to the second reverse idle gear 32 is transmitted to the reverse output gear 27 that meshes with the second reverse idle gear 32, and is further transmitted to the driving wheels from the final drive gear 28 on the output shaft 20 via the differential gear 6.

The effect of Embodiment 1 is described below. As described above, the final drive gear 28 on the output shaft 20 is disposed in the position in the axial direction that corresponds to the synchronizer 60 for fifth gear and sixth gear on the input shaft 10. As a result, as compared to a case where the final drive gear 28 is disposed in a position shifted from the gear train and the synchronizer in the axial direction as in the prior art, the size of the output shaft 20 in the axial direction can be shortened.

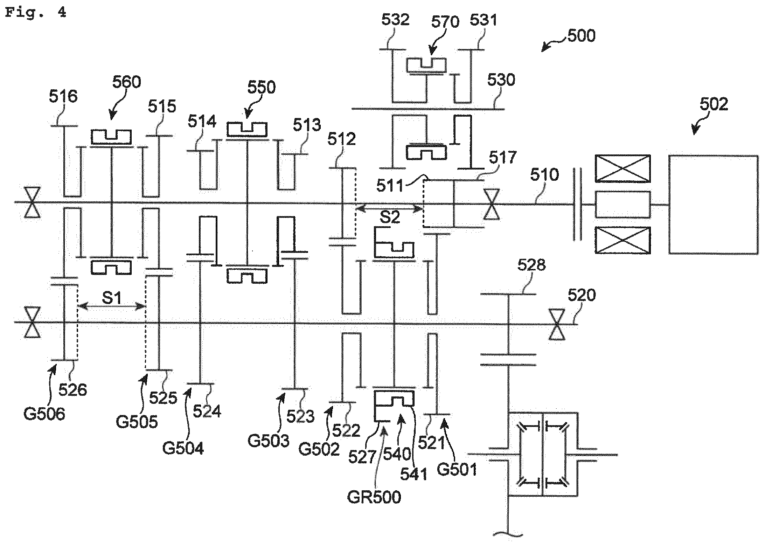

Specifically, in the transmission 500 of the prior art as that illustrated in FIG. 4, in the region in the axial direction in which a synchronizer 560 for fifth gear and sixth gear is disposed, a gear and the like do not exist on the output shaft 520 and an empty space S1 is formed.

Meanwhile, in this embodiment, the gear train G5 for fifth gear, the gear train G6 for sixth gear, and the synchronizer 60 for fifth gear and sixth gear are disposed closer to the driving source 2 side than the other gear trains G1 to G4, and the final drive gear 28 is disposed in the empty space on the output shaft 20 that corresponds to the synchronizer 60 for fifth gear and sixth gear.

As a result, the shaft length of the output shaft 20 can be shortened without causing the structure of the transmission 1 to become complicated. In particular, the final drive gear 28 is disposed more to the side opposite to the driving source 2 as compared to the prior art, and hence the part of the output shaft 20 on the driving source 2 side can be reduced. In addition, the part of the input shaft 10 on the driving source 2 side can also be reduced, and the layout efficiency of the transmission 1 can be improved. As a result, for example, a configuration in which the gear train G5 closest to the driving source 2 side is disposed closer to the driving source 2 as compared to the prior art and the like is easily realized.

The final drive gear 28 on the output shaft 20 is disposed so as to overlap with the synchronizer 60 for fifth gear and sixth gear that corresponds to the sixth gear that is the gear train for fastest stage in the axial direction. The torque necessary for the synchronization tends to decrease as the stage becomes a faster stage, for example, and hence the friction surface does not need to be large for the synchronizer 60 for fifth gear and sixth gear, and the synchronizer 60 for fifth gear and sixth gear has a smaller diameter as compared to the other synchronizers 40 and 50. Therefore, the interference between the synchronizer 60 for fifth gear and sixth gear and the final drive gear 28 in the radial direction can be easily avoided.

The powertrain in this embodiment is a so-called transversely mounted type in which the input shaft 10 and the output shaft 20 are disposed so as to extend in the vehicle body width direction, and hence the shortening of the full length of the transmission 1 in the axial direction is requested in a stronger manner under strict mounting conditions in the vehicle body width direction. In addition, the powertrain of this embodiment is a powertrain of a so-called hybrid vehicle including the engine 3 and the motor 4 as the driving source 2, and hence a stricter layout condition is forced. In regard to this point, by devising the configuration of the gear trains of the transmission 1 and the arrangement of the final drive gear 28 as described above, the ease of mounting the engine 3, the motor 4, and the transmission 1 is improved in the space in the engine compartment that is limited in the vehicle body width direction.

### [Embodiment 2]

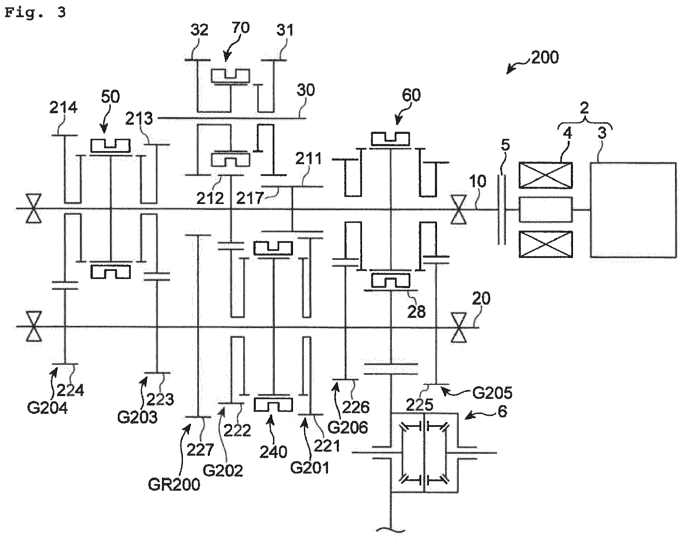

Next, with reference to FIG. 3, a vehicle transmission according to Embodiment 2 is described. Note that, in Embodiment 2, configurations similar to those in Embodiment 1 are denoted by the same reference characters in FIG. 3, and the description thereof is omitted.

As illustrated in FIG. 3, as with Embodiment 1, a transmission 200 of Embodiment 2 includes the input shaft 10, the output shaft 20, and the reverse idle shaft 30 that are disposed in parallel with each other, and a plurality of gear trains G201 to G206 for forward gears and a gear train GR200 for reverse gear are provided between the input shaft 10 and the output shaft 20.

Specifically, the plurality of gear trains G201 to G206 and GR200 between the input shaft 10 and the output shaft 20 are disposed so as to line up in the order of the gear train G205 for fifth gear, the gear train G206 for sixth gear, the gear train G201 for first gear, the gear train G202 for second gear, the gear train GR200 for reverse gear, the gear train G203 for third gear, and the gear train G204 for fourth gear in the axial direction from the driving source 2 side. As with Embodiment 1, input gears 211 to 216 and output gears 221 to 226 of the gear trains are disposed in corresponding positions in the axial direction.

A synchronizer 240 for first gear and second gear is disposed between the gear train G201 for first gear and the gear train G202 for second gear on the output shaft 20. On the input shaft 10, the synchronizer 50 for third gear and fourth gear is disposed between the gear train G203 for third gear and the gear train G204 for fourth gear, and the synchronizer 60 for fifth gear and sixth gear is disposed between gear train G205 for fifth gear and the gear train G206 for sixth gear.

On the reverse idle shaft 30, the first reverse idle gear 31 and the second reverse idle gear 32 are loosely fitted, and the synchronizer 70 for reverse gear is disposed between both of the reverse idle gears 31 and 32.

In Embodiment 2, unlike the reverse output gear 27 (see FIG. 1) of Embodiment 1 formed on the synchro sleeve 41 of the synchronizer 40 for first gear and second gear, the reverse output gear 227 is provided so as to be independent of the synchronizer 240 for first gear and second gear. Accordingly, in the transmission 200 in Embodiment 2, the arrangement of the gear train G201 for first gear and the gear train G202 for second gear, and the arrangement and the configuration of the reverse gear train GR200 and the synchronizer 240 for first gear and second gear are different from those in Embodiment 1.

The reverse output gear 227 is disposed so as to be independent of the synchronizer 240 for first gear and second gear and adjacent to the side, which is opposite to the driving source 2, of the output gear 222 for second gear on the output shaft 20. In addition, the second reverse idle gear 32 that meshes with the reverse output gear 227 is disposed on the side opposite to the driving source 2 than the input gear 212 for second gear.

In other words, by disposing the second reverse idle gear 32 on the side opposite to the driving source 2, the entirety of the gears 31 and 32 and the synchronizer 70 for reverse gear on the reverse idle shaft 30 is disposed so as to be offset to the side opposite to the driving source 2 in the axial direction as compared to Embodiment 1 illustrated in FIG. 1. As a result, the first reverse idle gear 31 is disposed on the side opposite to the driving source 2 in the axial direction with respect to the output gear 221 for first gear. Specifically, a reverse input gear 217 that meshes with the first reverse idle gear 31 is disposed closer to the side opposite to the driving source 2 than the input gear 211 for first gear that meshes with the output gear 221 for first gear.

The final drive gear 28 on the output shaft 20 is also disposed in a position in the axial direction that corresponds to the synchronizer 60 for fifth gear and sixth gear on the input shaft 10 in Embodiment 2. As a result, as with Embodiment 1, the size of the output shaft 20 in the axial direction can be shortened as compared to a case where the final drive gear 28 is disposed in a position shifted from the gear train and the synchronizer in the axial direction as in the prior art.

According to Embodiment 2, the reverse input gear 217 is disposed so as to be adjacent to the side, which is opposite to the driving source 2, of the input gear 211 for first gear. Therefore, in the arrangement of the reverse input gear 217, a space S2 (see FIG. 4) between an input gear 511 for first gear and an input gear 512 for second gear of the prior art can be effectively used. Therefore, as compared to the structure of the prior art in which the reverse input gear 517 is disposed closer to the driving source 502 side than the input gear 511 for first gear as that illustrated in FIG. 4, the part in the input shaft 10 that is closer to the driving source 2 side than the input gear 211 for first gear can be shortened, and the size between the gear train G201 for first gear and the driving source 2 in the axial direction can be decreased.

In the transmission 500 of the prior art as that illustrated in FIG. 4, a reverse output gear 527 and a synchro sleeve 541 of the synchronizer 540 for first gear and second gear are integrated, and hence the synchronizer 540 is upsized in the axial direction. Meanwhile, the reverse output gear 227 of this embodiment is provided so as to be independent of the synchronizer 240 for first gear and second gear, and hence the synchronizer 240 for first gear and second gear can be formed in a compact manner in the axial direction. Therefore, the gear train G202 for second gear can be disposed near the gear train G201 for first gear in the axial direction. Therefore, on the input shaft 10, the interval between the input gear 211 for first gear and the input gear 212 for second gear in the axial direction can be shortened.

In the structure of the prior art illustrated in FIG. 4, the reverse output gear 527 and the synchro sleeve 541 of the synchronizer 540 for first gear and second gear are integrated on the output shaft 520, and hence a wide dead space S2 is formed between the input gear 511 for first gear and the input gear 512 for second gear on the input shaft 510 in the range in which the synchro sleeve 541 of the synchronizer 540 for first gear and second gear slides with the reverse output gear 527 in the axial direction because a gear, a synchronizer, and the like that may interfere with the reverse output gear 527 cannot be disposed.

Meanwhile, the reverse output gear 227 in this embodiment is provided so as to be independent of the synchronizer 240 for first gear and second gear, and hence does not slide in the axial direction. Therefore, as described above, the reverse input gear 217 can be disposed in a region in the axial direction between the input gear 211 for first gear and the input gear 212 for second gear that overlaps with the synchronizer 240 for first gear and second gear on the output shaft 20 without interfering with the reverse output gear 227. Therefore, in the arrangement of the reverse input gear 217, the dead space S2 (see FIG. 4) between the input gear 511 for first gear and the input gear 512 for second gear in Patent Document 1 can be effectively used.

Therefore, the extension of the input shaft 10 to the side opposite to the driving source 2 is suppressed although the reverse input gear 17 is disposed closer to the side opposite to the driving source 2 as compared to the prior art illustrated in FIG. 4. Therefore, the entire input shaft 10 can be effectively shortened.

In addition, in this embodiment, the first reverse idle gear 31 and the reverse input gear 217 are disposed on the side opposite to the driving source 2 with respect to the gear train G201 for first gear. Therefore, while a space S3 (see FIG. 1) between the gear train G1 for first gear and the gear train G6 for sixth gear is formed on the output shaft 20 in Embodiment 1, the gear train G201 for first gear can be disposed to be closer to the gear train G206 for sixth gear in Embodiment 2. As a result, the components on the output shaft 20 can be disposed so as to be closer to each other in the axial direction, and the output shaft 20 can also be effectively shortened. Therefore, the size of the transmission 200 in the axial direction can be shortened in a more effective manner.

As described above, according to Embodiment 2, by constructing a completely new layout that is different from the prior art, the input shaft 10 and the output shaft 20 can be effectively shortened, and all of the components can be disposed in a compact manner in the axial direction as a whole without interfering with each other. Thus, the vehicle transmission 1 can be formed in a compact manner in the axial direction as a whole. As a result, the ease of mounting the transmission 1 onto a vehicle can be effectively increased.

The present invention has been described above by way of the abovementioned embodiments, but the present invention is not limited to the abovementioned embodiments.

For example, in the abovementioned embodiments, the reverse input gear and the input gear for first gear are integrally formed, but the reverse input gear and the input gear for first gear only need to be disposed so as to be adjacent to each other, and may be formed with separate bodies.

For example, in the abovementioned embodiments, the synchronizer 70 for reverse gear is disposed between the first reverse idle gear 31 and the second reverse idle gear 32 on the reverse idle shaft 30 as a connection/disconnection mechanism, but a connection/disconnection mechanism such as a dog clutch may be used instead of the synchronizer 70 for reverse gear.

For example, in the abovementioned embodiments, a so-called hybrid vehicle including the motor and the engine in the driving source is formed, but the driving source may also include only one of the motor and the engine.

For example, the vehicle including the powertrain of the abovementioned embodiments is formed by a so-called series hybrid vehicle including the clutch apparatus 5 between the driving source 2 and the transmission 1, but a so-called parallel hybrid vehicle including a second clutch apparatus between the motor and the engine in addition the clutch apparatus 5 may be used.

### [Industrial Applicability]

As described above, according to the present invention, the vehicle transmission can be further downsized while maintaining simplification of the structure in the vehicle transmission. Therefore, there is a possibility of the vehicle transmission being suitably used in the field of the manufacturing industry of the type of transmission as above.

### [Explanation of Symbols]

1, 200 Transmission (vehicle transmission)
1, 2 Powertrain
2 Driving source
3 Engine
4 Motor
6 Differential gear
10 Input shaft
11 Input gear for first gear
11 Driving-source-side input gear
11, 12, 23 to 26 Fixed gears for first gear to sixth gear (fixed gears)
12 Input gear for second gear
17, 217 Reverse input gear
20 Output shaft
21, 22, 13 to 16 Rotatably fitted gears for first gear to sixth gear (rotatably fitted gears)
21 Output gear for first gear
22 Output gear for second gear
22 Non-driving-source-side output gear 27, 227 Reverse output gear
28 Final drive gear
30 Reverse idle shaft
31 First reverse idle gear
32 Second reverse idle gear
40, 50, 60 Synchronizer
40 Synchronizer for first gear and second gear
60 Synchronizer for fifth gear and sixth gear (predetermined synchronizer)
70 Synchronizer for reverse gear (connection/disconnection mechanism)
G1 to G6, G201 to G206 Gear trains for forward gears
G1, G201 Gear train for first gear
G2, G202 Gear train for second gear
G5, G6, G205, G206 Two predetermined gear trains
G6, G206 Gear train for sixth gear (predetermined gear train)
G6, G206 Gear train for maximum speed gear
GR, GR200 Gear train for reverse gear

## Claims

1. A vehicle transmission (1; 200), comprising:
an input shaft (10) into which a driving force from a driving source (2) can be input;
an output shaft (20) disposed in parallel with the input shaft (10); and
a plurality of gear trains (G1 to G6; G201 to G206) for forward gears provided between the input shaft (10) and the output shaft (20), wherein:
the output shaft (20) is equipped with a final drive gear (28) configured to drive a differential gear (6);
each of the plurality of gear trains (G1 to G6; G201 to G206) comprises a fixed gear (11, 12, 23 to 26; 211, 212, 223 to 226) fixed to one of the input shaft (10) and the output shaft (20), and a fitted gear (13 to 16, 21, 22; 213 to 216, 221, 222) rotatably fitted on the other of the input shaft (10) and the output shaft (20);
the fitted gear (13 to 16, 21, 22; 213 to 216, 221, 222) of each of the plurality of gear trains (G1 to G6; G201 to G206) is provided to be capable of being fixed to the input shaft (10) or the output shaft (20) via a synchronizer (40, 50, 60) that is provided adjacent to the fitted gear (13 to 16, 21, 22; 213 to 216, 221, 222) on the same axis as the fitted gear (13 to 16, 21, 22; 213 to 216, 221, 222);
a predetermined gear train (G6; G206) among the plurality of gear trains (G1 to G6; G201 to G206) includes the fixed gear (26; 226) in a position adjacent to the final drive gear (28) on the output shaft (20); and
the final drive gear (28) is disposed in a region that overlaps, in an axial direction, with a predetermined synchronizer (60) for the predetermined gear train (G6; G206),
**characterized in that**
the gear trains (G1 to G3, G6; G201 to G203, G206) for a first gear, a second gear, a third gear and a sixth gear are located between the gear trains (G4, and G5; G204, G205) for a fourth gear and a fifth gear in the axial direction.

2. The vehicle transmission (1; 200) of claim 1, wherein:
the predetermined synchronizer (60) is used for both of two predetermined gear trains (G5, G6; G205, G206) among the plurality of gear trains (G1 to G6; G201 to G206); and
the final drive gear (28) and the predetermined synchronizer (60) are disposed between the two predetermined gear trains (G5, G6; G205, G206) in the axial direction.

3. The vehicle transmission (1; 200) of claim 1 or 2, wherein the predetermined gear train (G6; G206) is a gear train having the lowest gear ratio among the plurality of gear trains (G1 to G6; G201 to G206), and the gear ratio is defined as the ratio of the input speed to the output speed.

4. The vehicle transmission (1; 200) of any one of the preceding claims, wherein
the predetermined synchronizer (60) is located closer to the driving source (2) than other synchronizers (50, 70) in the axial direction.

5. The vehicle transmission (1; 200) of any one of the preceding claims, wherein the predetermined gear train (G6; G206) has a gear ratio lower than 1, and the gear ratio is defined as the ratio of the input speed to the output speed.

6. The vehicle transmission (1; 200) of any one of the preceding claims, wherein
the vehicle transmission (1; 200) is a six-speed transmission.

7. The vehicle transmission (1; 200) of any one of the preceding claims, further comprising a reverse gear train (GR2; GR200) for a reverse gear,
wherein
the predetermined gear train (G6; G206) is located between the reverse gear train (GR2; GR200) and the driving source (2) in the axial direction.

8. The vehicle transmission (1; 200) of claim 7, wherein
the reverse gear train (GR2; GR200) is located between the predetermined gear train (G6; G206) and a gear train having a gear ratio higher than a gear ratio of the predetermined gear train (G6; G206) in the axial direction, and the gear ratio is defined as the ratio of the input speed to the output speed.

9. The vehicle transmission (200) of any one of the preceding claims, further comprising:
a reverse idle shaft (30) disposed in parallel with the input shaft (10) and the output shaft (20); and
a reverse gear train (GR200) for a reverse gear provided so as to span across the input shaft (10), the output shaft (20), and the reverse idle shaft (30),
wherein
the plurality of gear trains (G201 to G206) includes a gear train (G201) for the first gear and a gear train (G202) for the second gear;
the gear train (G201) for the first gear includes an input gear (211) for the first gear fixed to the input shaft (10), and an output gear (221) for the first gear that is rotatably fitted on the output shaft (20) so as to mesh with the input gear (211) for the first gear;
the gear train (G202) for the second gear includes an input gear (212) for the second gear fixed to the input shaft (10), and an output gear (222) for the second gear that is rotatably fitted on the output shaft (20) so as to mesh with the input gear (212) for the second gear;
a synchronizer (70) for the first gear and the second gear that is configured to selectively fix either one of the output gear for the first gear and the output gear for the second gear to the output shaft (20) is provided between the output gear (221) for the first gear and the output gear (222) for the second gear on the output shaft (20);
the gear train (GR200) for the reverse gear includes:
a reverse input gear (217) provided on the input shaft (10);
a first reverse idle gear (31) that is rotatably fitted on the reverse idle shaft (30) and configured to mesh with the reverse input gear (217);
a second reverse idle gear (32) rotatably fitted on the reverse idle shaft (30) and disposed so as to be separated from the first reverse idle gear (31) with a predetermined gap in the axial direction; and
a reverse output gear (27) that is provided on the output shaft (20) and configured to mesh with the second reverse idle gear (32);
a connection/disconnection mechanism (70) configured to form and/or release connection between the first reverse idle gear (31) and the second reverse idle gear (32) is provided in the predetermined gap on the reverse idle shaft (30);
an input gear (211) positioned closer to the driving source (2) among the input gear (211) for the first gear and the input gear (212) for the second gear on the input shaft (10) is disposed between the reverse input gear (217) and the driving source (2) and adjacent to the reverse input gear (217); and
an output gear (222) positioned farther from the driving source (2) among the output gear (221) for the first gear and the output gear (222) for the second gear on the output shaft (20) is disposed between the reverse output gear (227) and the driving source (2) and adjacent to the reverse output gear (227).

10. The vehicle transmission (200) of any one of the preceding claims, wherein the vehicle transmission (1; 200) is a manual transmission.

11. A powertrain (1, 2; 200), comprising:
the vehicle transmission (1; 200) according to any one of the preceding claims; and
a driving source (2) including an engine (3) and a motor (4) disposed on a same axis line as the input shaft (10) .

12. The powertrain (1, 2; 200) of claim 11, further comprising a differential gear (6).

13. A vehicle comprising:
the powertrain (1, 2; 200) according to claim 11 or 12; and
a driving wheel.

14. The vehicle of claim 13, wherein:
the input shaft (10) and the output shaft (20) extend in a vehicle body width direction; and
the final drive gear (28) is configured to transmit power to a differential gear (6) connected to a driving wheel.

## Patentansprüche

1. Fahrzeuggetriebe (1; 200), umfassend:
eine Eingangswelle (10), der eine Antriebskraft von einer Antriebsquelle (2) zugeführt werden kann;
eine Ausgangswelle (20), die parallel zu der Eingangswelle (10) angeordnet ist; und
eine Vielzahl von Zahnradgetrieben (G1 bis G6; G201 bis G206) für Vorwärtsgänge, die zwischen der Eingangswelle (10) und der Ausgangswelle (20) vorgesehen sind, wobei:
die Ausgangswelle (20) mit einem Achsantriebsrad (28) ausgestattet ist, das so ausgestaltet ist, dass es ein Differentialgetriebe (6) antreibt;
jedes der Vielzahl von Zahnradgetrieben (G1 bis G6; G201 bis G206) ein fixiertes Zahnrad (11, 12, 23 bis 26; 211, 212, 223 bis 226), das an einer von der Eingangswelle (10) und der Ausgangswelle (20) fixiert ist, und ein aufgesetztes Zahnrad (13 bis 16, 21, 22; 213 bis 216, 221, 222), das drehbar auf der anderen von der Eingangswelle (10) und der Ausgangswelle (20) aufgesetzt ist, umfasst;
das aufgesetzte Zahnrad (13 bis 16, 21, 22; 213 bis 216, 221, 222) von jedem der Vielzahl von Zahnradgetrieben (G1 bis G6; G201 bis G206) so vorgesehen ist, dass es an der Eingangswelle (10) oder der Ausgangswelle (20) mittels einer Synchronisiereinrichtung (40, 50, 60) fixiert werden kann, die benachbart zu dem aufgesetzten Zahnrad (13 bis 16, 21, 22; 213 bis 216, 221, 222) auf der gleichen Achse wie das aufgesetzte Zahnrad (13 bis 16, 21, 22; 213 bis 216, 221, 222) vorgesehen ist;
ein vorbestimmtes Zahnradgetriebe (G6; G206) unter der Vielzahl von Zahnradgetrieben (G1 bis G6; G201 bis G206) das fixierte Zahnrad (26; 226) in einer Position benachbart zu dem Achsantriebsrad (28) auf der Ausgangswelle (20) umfasst; und
das Achsantriebsrad (28) in einem Bereich angeordnet ist, der sich, in einer axialen Richtung, mit einer vorbestimmten Synchronisiereinrichtung (60) für das vorbestimmte Zahnradgetriebe (G6; G206) überlappt,
**dadurch gekennzeichnet, dass**
sich die Zahnradgetriebe (G1 bis G3, G6; G201 bis G203, G206) für einen ersten Gang, einen zweiten Gang, einen dritten Gang und einen sechsten Gang in der axialen Richtung zwischen den Zahnradgetrieben (G4 und G5; G204, G205) für einen vierten Gang und einen fünften Gang befinden.

2. Fahrzeuggetriebe (1; 200) nach Anspruch 1, wobei:
die vorbestimmte Synchronisiereinrichtung (60) für beide der zwei vorbestimmten Zahnradgetriebe (G5, G6; G205, G206) unter der Vielzahl von Zahnradgetrieben (G1 bis G6; G201 bis G206) verwendet wird; und
das Achsantriebsrad (28) und die vorbestimmte Synchronisiereinrichtung (60) in der axialen Richtung zwischen den zwei vorbestimmten Zahnradgetrieben (G5, G6; G205, G206) angeordnet sind.

3. Fahrzeuggetriebe (1; 200) nach Anspruch 1 oder 2, wobei das vorbestimmte Zahnradgetriebe (G6; G206) ein Zahnradgetriebe ist, das das niedrigste Übersetzungsverhältnis unter der Vielzahl von Zahnradgetrieben (G1 bis G6; G201 bis G206) aufweist, und wobei das Übersetzungsverhältnis als das Verhältnis von der Eingangsdrehzahl zu der Ausgangsdrehzahl definiert ist.

4. Fahrzeuggetriebe (1; 200) nach einem beliebigen der vorhergehenden Ansprüche, wobei
sich die vorbestimmte Synchronisiereinrichtung (60) in der axialen Richtung näher an der Antriebsquelle (2) befindet als andere Synchronisiereinrichtungen (50, 70).

5. Fahrzeuggetriebe (1; 200) nach einem beliebigen der vorhergehenden Ansprüche, wobei das vorbestimmte Zahnradgetriebe (G6; G206) ein Übersetzungsverhältnis von weniger als 1 aufweist, und wobei das Übersetzungsverhältnis als das Verhältnis von der Eingangsdrehzahl zu der Ausgangsdrehzahl definiert ist.

6. Fahrzeuggetriebe (1; 200) nach einem beliebigen der vorhergehenden Ansprüche, wobei
das Fahrzeuggetriebe (1; 200) ein Sechsganggetriebe ist.

7. Fahrzeuggetriebe (1; 200) nach einem beliebigen der vorhergehenden Ansprüche, das ferner ein gegenläufiges Zahnradgetriebe (GR2; GR200) für einen Rückwärtsgang umfasst,
wobei
sich das vorbestimmte Zahnradgetriebe (G6; G206) in der axialen Richtung zwischen dem gegenläufigen Zahnradgetriebe (GR2; GR200) und der Antriebsquelle (2) befindet.

8. Fahrzeuggetriebe (1; 200) nach Anspruch 7, wobei
sich das gegenläufige Zahnradgetriebe (GR2; GR200) in der axialen Richtung zwischen dem vorbestimmten Zahnradgetriebe (G6; G206) und einem Zahnradgetriebe befindet, das ein Übersetzungsverhältnis aufweist, das höher als ein Übersetzungsverhältnis des vorbestimmten Zahnradgetriebes (G6; G206) ist, und wobei das Übersetzungsverhältnis als das Verhältnis von der Eingangsdrehzahl zu der Ausgangsdrehzahl definiert ist.

9. Fahrzeuggetriebe (200) nach einem beliebigen der vorhergehenden Ansprüche, ferner umfassend:
eine gegenläufige Leerlaufwelle (30), die parallel zu der Eingangswelle (10) und der Ausgangswelle (20) angeordnet ist; und
ein gegenläufiges Zahnradgetriebe (GR200) für einen Rückwärtsgang, das so vorgesehen ist, dass es die Eingangswelle (10), die Ausgangswelle (20) und die gegenläufige Leerlaufwelle (30) überspannt,
wobei
die Vielzahl von Zahnradgetrieben (G201 bis G206) ein Zahnradgetriebe (G201) für den ersten Gang und ein Zahnradgetriebe (G202) für den zweiten Gang umfasst;
das Zahnradgetriebe (G201) für den ersten Gang ein Eingangszahnrad (211) für den ersten Gang, das an der Eingangswelle (10) fixiert ist, und ein Ausgangszahnrad (221) für den ersten Gang, das so drehbar auf der Ausgangswelle (20) aufgesetzt ist, dass es sich mit dem Eingangszahnrad (211) für den ersten Gang verzahnt, umfasst;
das Zahnradgetriebe (G202) für den zweiten Gang ein Eingangszahnrad (212) für den zweiten Gang, das an der Eingangswelle (10) fixiert ist, und ein Ausgangszahnrad (222) für den zweiten Gang, das so drehbar auf der Ausgangswelle (20) aufgesetzt ist, dass es sich mit dem Eingangszahnrad (212) für den zweiten Gang verzahnt, umfasst;
eine Synchronisiereinrichtung (70) für den ersten Gang und den zweiten Gang, die so ausgestaltet ist, dass sie selektiv eines von dem Ausgangszahnrad für den ersten Gang und dem Ausgangszahnrad für den zweiten Gang an der Ausgangswelle (20) fixiert, zwischen dem Ausgangszahnrad (221) für den ersten Gang und dem Ausgangszahnrad (222) für den zweiten Gang auf der Ausgangswelle (20) vorgesehen ist;
das Zahnradgetriebe (GR200) für den Rückwärtsgang Folgendes umfasst:
ein gegenläufiges Eingangszahnrad (217), das auf der Eingangswelle (10) vorgesehen ist;
ein erstes gegenläufiges Leerlaufzahnrad (31), das drehbar auf der gegenläufigen Leerlaufwelle (30) aufgesetzt ist und so ausgestaltet ist, dass es sich mit dem gegenläufigen Eingangszahnrad (217) verzahnt;
ein zweites gegenläufiges Leerlaufzahnrad (32), das drehbar auf der gegenläufigen Leerlaufwelle (30) aufgesetzt ist und so angeordnet ist, dass es von dem ersten gegenläufigen Leerlaufzahnrad (31) mit einem vorbestimmten Zwischenraum in der axialen Richtung getrennt ist; und
ein gegenläufiges Ausgangszahnrad (27), das auf der Ausgangswelle (20) vorgesehen ist und so ausgestaltet ist, dass es sich mit dem zweiten gegenläufigen Leerlaufzahnrad (32) verzahnt;
ein Verbindungs-/Trennungsmechanismus (70), der so ausgestaltet ist, dass er eine Verbindung zwischen dem ersten gegenläufigen Leerlaufzahnrad (31) und dem zweiten gegenläufigen Leerlaufzahnrad (32) herstellt und/oder löst, in dem vorbestimmten Zwischenraum auf der gegenläufigen Leerlaufwelle (30) vorgesehen ist;
ein Eingangszahnrad (211), das unter dem Eingangszahnrad (211) für den ersten Gang und dem Eingangszahnrad (212) für den zweiten Gang auf der Eingangswelle (10) näher an der Antriebsquelle (2) positioniert ist, zwischen dem gegenläufigen Eingangszahnrad (217) und der Antriebsquelle (2) und benachbart zu dem gegenläufigen Eingangszahnrad (217) angeordnet ist; und
ein Ausgangszahnrad (222), das unter dem Ausgangszahnrad (221) für den ersten Gang und dem Ausgangszahnrad (222) für den zweiten Gang auf der Ausgangswelle (20) weiter weg von der Antriebsquelle (2) positioniert ist, zwischen dem gegenläufigen Ausgangszahnrad (227) und der Antriebsquelle (2) und benachbart zu dem gegenläufigen Ausgangszahnrad (227) angeordnet ist.

10. Fahrzeuggetriebe (200) nach einem beliebigen der vorhergehenden Ansprüche, wobei das Fahrzeuggetriebe (1; 200) ein Handschaltgetriebe ist.

11. Antriebsstrang (1, 2; 200), umfassend:
ein Fahrzeuggetriebe (1; 200) nach einem beliebigen der vorhergehenden Ansprüche; und
eine Antriebsquelle (2), die einen Verbrennungsmotor (3) und einen Motor (4) umfasst, die auf einer gleichen Achsenlinie wie die Eingangswelle (10) angeordnet sind.

12. Antriebsstrang (1, 2; 200) nach Anspruch 11, der ferner ein Differentialgetriebe (6) umfasst.

13. Fahrzeug, umfassend:
den Antriebsstrang (1, 2; 200) nach Anspruch 11 oder 12; und
ein Antriebsrad.

14. Fahrzeug nach Anspruch 13, wobei:
sich die Eingangswelle (10) und die Ausgangswelle (20) in einer Fahrzeugkarosserie-Breitenrichtung erstrecken; und
das Achsantriebsrad (28) so ausgestaltet ist, dass es Leistung auf ein Differentialgetriebe (6) überträgt, das mit einem Antriebsrad verbunden ist.

## Revendications

1. Transmission de véhicule (1 ; 200), comprenant :
- un arbre d'entrée (10) dans lequel une force d'entraînement venant d'une source d'entraînement (2) peut être introduite ;
- un arbre de sortie (20) disposé en parallèle avec l'arbre d'entrée (10) ; et
- une pluralité de trains d'engrenages (G1 à G6 ; G201 à G206) pour des marches avant prévues entre l'arbre d'entrée (10) et l'arbre de sortie (20), dans laquelle :
- l'arbre de sortie (20) est équipé d'un engrenage d'entraînement final (28) configuré pour entraîner un engrenage différentiel (6) ;
- chacun de la pluralité de trains d'engrenages (G1 à G6 ; G201 à G206) comprend un engrenage fixe (11, 12, 23 à 26 ; 211, 212, 223 à 226) fixé à l'un parmi l'arbre d'entrée (10) et l'arbre de sortie (20), et un engrenage ajusté (13 à 16, 21, 22 ; 213 à 216, 221, 222) ajusté de façon rotative sur l'autre parmi l'arbre d'entrée (10) et l'arbre de sortie (20) ;
- l'engrenage ajusté (13 à 16, 21, 22 ; 213 à 216, 221, 222) de chacun parmi la pluralité de trains d'engrenages (G1 à G6 ; G201 à G206) est conçu pour pouvoir être fixé à l'arbre d'entrée (10) ou à l'arbre de sortie (20) par le biais d'un synchroniseur (40, 50, 60) prévu à côté de l'engrenage ajusté (13 à 16, 21, 22 ; 213 à 216, 221, 222) sur le même axe que l'engrenage ajusté (13 à 16, 21, 22 ; 213 à 216, 221, 222) ;
- un train d'engrenages prédéterminé (G6 ; G206) parmi la pluralité de trains d'engrenages (G1 à G6 ; G201 à G206) inclut l'engrenage fixe (26 ; 226) à un emplacement adjacent à l'engrenage d'entraînement final (28) sur l'arbre de sortie (20) ; et
- l'engrenage d'entraînement final (28) est disposé dans une région chevauchant, dans une direction axiale, un synchroniseur prédéterminé (60) pour le train d'engrenages prédéterminé (G6 ; G206),
**caractérisée en ce que**
- les trains d'engrenages (G1 à G3, G6 ; G201 à G203, G206) pour un premier engrenage, un deuxième engrenage, un troisième engrenage et un sixième engrenage se trouvent entre les trains d'engrenages (G4, et G5 ; G204, G205) pour un quatrième engrenage et un cinquième engrenage dans la direction axiale.

2. Transmission de véhicule (1 ; 200) selon la revendication 1, dans laquelle :
- le synchroniseur prédéterminé (60) est utilisé à la fois pour deux trains d'engrenages prédéterminés (G5, G6 ; G205, G206) parmi la pluralité de trains d'engrenages (G1 à G6 ; G201 à G206) ; et
- l'engrenage d'entraînement final (28) et le synchroniseur prédéterminé (60) sont disposés entre les deux trains d'engrenages prédéterminés (G5, G6 ; G205, G206) dans la direction axiale.

3. Transmission de véhicule (1 ; 200) selon la revendication 1 ou 2, dans laquelle le train d'engrenages prédéterminé (G6 ; G206) est un train d'engrenages présentant le rapport d'engrenage le plus bas parmi la pluralité de trains d'engrenages (G1 à G6 ; G201 à G206), et le rapport d'engrenage est défini comme le rapport de la vitesse d'entrée à la vitesse de sortie.

4. Transmission de véhicule (1 ; 200) selon l'une quelconque des revendications précédentes, dans laquelle
le synchroniseur prédéterminé (60) se trouve plus près de la source d'entraînement (2) que d'autres synchroniseurs (50, 70) dans la direction axiale.

5. Transmission de véhicule (1 ; 200) selon l'une quelconque des revendications précédentes, dans laquelle le train d'engrenages prédéterminé (G6 ; G206) présente un rapport d'engrenage inférieur à 1, et le rapport d'engrenage est défini comme le rapport de la vitesse d'entrée à la vitesse de sortie.

6. Transmission de véhicule (1 ; 200) selon l'une quelconque des revendications précédentes, dans laquelle
la transmission de véhicule (1 ; 200) est une transmission à six vitesses.

7. Transmission de véhicule (1 ; 200) selon l'une quelconque des revendications précédentes, comprenant en outre un train de marche arrière (GR2 ; GR200) pour une marche arrière,
dans laquelle
le train d'engrenages prédéterminé (G6 ; G206) se trouve entre le train de marche arrière (GR2 ; GR200) et la source d'entraînement (2) dans la direction axiale.

8. Transmission de véhicule (1 ; 200) selon la revendication 7, dans laquelle
le train de marche arrière (GR2 ; GR200) se trouve entre le train d'engrenages prédéterminé (G6 ; G206) et un train d'engrenages présentant un rapport d'engrenage supérieur à un rapport d'engrenage du train d'engrenages prédéterminé (G6 ; G206) dans la direction axiale, et le rapport d'engrenage est défini comme le rapport de la vitesse d'entrée à la vitesse de sortie.

9. Transmission de véhicule (200) selon l'une quelconque des revendications précédentes, comprenant en outre :
- un arbre fou de marche arrière (30) disposé en parallèle avec l'arbre d'entrée (10) et l'arbre de sortie (20) ; et
- un train de marche arrière (GR200) pour une marche arrière, conçu de manière à s'étendre sur l'arbre d'entrée (10), l'arbre de sortie (20), et l'arbre fou de marche arrière (30),
dans laquelle
- la pluralité de trains d'engrenages (G201 à G206) inclut un train d'engrenage (G201) pour le premier engrenage et un train d'engrenage (G202) pour le deuxième engrenage ;
- le train d'engrenage (G201) pour le premier engrenage inclut un engrenage d'entrée (211) pour le premier engrenage fixé à l'arbre d'entrée (10), et un engrenage de sortie (221) pour le premier engrenage, lequel est ajusté de façon rotative sur l'arbre de sortie (20) de manière à engrener avec l'engrenage d'entrée (211) pour le premier engrenage ;
- le train d'engrenage (G202) pour le deuxième engrenage inclut un engrenage d'entrée (212) pour le deuxième engrenage fixé à l'arbre d'entrée (10), et un engrenage de sortie (222) pour le deuxième engrenage, lequel est ajusté de façon rotative sur l'arbre de sortie (20) de manière à engrener avec l'engrenage d'entrée (212) pour le deuxième engrenage ;
- un synchroniseur (70) pour le premier engrenage et le deuxième engrenage, lequel est configuré pour fixer sélectivement l'un quelconque parmi l'engrenage de sortie pour le premier engrenage et l'engrenage de sortie pour le deuxième engrenage sur l'arbre de sortie (20), est prévu entre l'engrenage de sortie (221) pour le premier engrenage et l'engrenage de sortie (222) pour le deuxième engrenage sur l'arbre de sortie (20) ;
- le train d'engrenages (GR200) pour la marche arrière inclut :
- un engrenage d'entrée de marche arrière (217) prévu sur l'arbre d'entrée (10) ;
- un premier engrenage fou de marche arrière (31) ajusté de façon rotative sur l'arbre fou de marche arrière (30) et configuré pour engrener avec l'engrenage d'entrée de marche arrière (217) ;
- un deuxième engrenage fou de marche arrière (32) ajusté de façon rotative sur l'arbre fou de marche arrière (30) et disposé de manière à être séparé du premier engrenage fou de marche arrière (31) selon un espace prédéterminé dans la direction axiale ; et
- un engrenage de sortie de marche arrière (27) prévu sur l'arbre de sortie (20) et configuré pour engrener avec le deuxième engrenage fou de marche arrière (32) ;
- un mécanisme de connexion/déconnexion (70) configuré pour former et/ou libérer une connexion entre le premier engrenage fou de marche arrière (31) et le deuxième engrenage fou de marche arrière (32) est prévu dans l'espace prédéterminé sur l'arbre fou de marche arrière (30) ;
- un engrenage d'entrée (211) positionné plus près de la source d'entraînement (2) parmi l'engrenage d'entrée (211) pour le premier engrenage et l'engrenage d'entrée (212) pour le deuxième engrenage sur l'arbre d'entrée (10) est disposé entre l'engrenage d'entrée de marche arrière (217) et la source d'entraînement (2) et de façon adjacente à l'engrenage d'entrée de marche arrière (217) ; et
- un engrenage de sortie (222) positionné plus loin de la source d'entraînement (2) parmi l'engrenage de sortie (221) pour le premier engrenage et l'engrenage de sortie (222) pour le deuxième engrenage sur l'arbre de sortie (20) est disposé entre l'engrenage de sortie de marche arrière (227) et la source d'entraînement (2) et de façon adjacente à l'engrenage de sortie de marche arrière (227).

10. Transmission de véhicule (200) selon l'une quelconque des revendications précédentes, dans laquelle la transmission de véhicule (1 ; 200) est une transmission manuelle.

11. Groupe motopropulseur (1, 2 ; 200), comprenant :
- la transmission de véhicule (1 ; 200) selon l'une quelconque des revendications précédentes ; et
- une source d'entraînement (2) incluant une machine (3) et un moteur (4) disposés sur une même ligne d'axe que l'arbre d'entrée (10).

12. Groupe motopropulseur (1, 2; 200) selon la revendication 11, comprenant en outre un engrenage différentiel (6).

13. Véhicule comprenant :
- le groupe motopropulseur (1, 2 ; 200) selon la revendication 11 ou 12 ; et
- une roue d'entraînement.

14. Véhicule selon la revendication 13, dans lequel :
- l'arbre d'entrée (10) et l'arbre de sortie (20) s'étendent dans une direction de largeur de corps de véhicule ; et
- un engrenage d'entraînement final (28) est configuré pour transmettre de la puissance à un engrenage différentiel (6) relié à une roue d'entraînement.
